# EUROPÄISCHE PATENTSCHRIFT

(11) **EP 2 597 358 B1**
(45) Veröffentlichungstag und Bekanntmachung des Hinweises auf die Patenterteilung: **23.08.2017**
(21) Anmeldenummer: 12189399.4
(22) Anmeldetag: 22.10.2012
(51) Int. Cl.: F16C 29/02, F16C 33/04, F21S 8/12, F21V 14/08, F21S 8/10, F16C 27/02, F16C 33/20

(54) **Projektionslichtmodul für einen Kraftfahrzeugscheinwerfer**
Projection light module for a motor vehicle headlamp
Module lumineux de projection pour un phare de véhicule automobile

(30) Priorität: 28.11.2011 DE 102011087225
(43) Veröffentlichungstag der Anmeldung: 29.05.2013
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, 72793 Pfullingen (DE)
(74) Vertreter: DREISS Patentanwälte PartG mbB

(56) Entgegenhaltungen:
- EP-A1- 1 591 313
- EP-A1- 1 867 917
- EP-A2- 2 278 218
- EP-A2- 2 381 167
- FR-A1- 2 868 507
- KR-A- 20110 084 786
- US-A1- 2005 135 713

## Beschreibung

Die vorliegende Erfindung betrifft ein Projektions-Lichtmodul für einen Kraftfahrzeugscheinwerfer nach dem Oberbegriff des Anspruchs 1. Ein solches Projektions-Lichtmodul ist aus der DE 103 40 961 und aus der EP 1 591 313 A1 bekannt und weist eine Lichtquelle, eine Primäroptik, eine Blendenwalze und eine Sekundäroptik auf. Dabei ist die Primäroptik dazu eingerichtet, Licht der Lichtquelle in eine erste Lichtverteilung zu bündeln. Die Blendenwalze ist dazu eingerichtet, die erste Lichtverteilung mit einer quer zur Lichtausbreitung liegenden abschattend wirksamen Blendenkante räumlich zu begrenzen. Die Blendenwalze ist in Lagern drehbar gelagert und so geformt, dass sich je nach Drehstellung der Blendenwalze verschiedene Lagen der abschattend wirksamen Blendenkante ergeben. Das eine Lager ist an einem ersten Ende der Blendenwalze angeordnet, und das andere Lager ist an einem zweiten Ende der Blendenwalze angeordnet. Die Sekundäroptik ist auf die erste Lichtverteilung fokussiert und dazu eingerichtet, die von der Blendenwalze begrenzte erste Lichtverteilung als zweite Lichtverteilung in das Vorfeld des Scheinwerfers zu projizieren.

Bei heute verwendeten Projektionslichtmodulen, die diese Merkmale aufweisen, ist zumindest ein Ende der Blendenwalze in einer starren Gleitlagerbuchse oder in einem Kugellager gelagert. Das andere Ende ist dabei mit einem Antrieb gekoppelt und durch die Kopplung mit dem Antrieb gelagert.

Sowohl der Antrieb an dem einen Ende der Blendenwalze als auch das Gleitlager oder Kugellager am anderen Ende der Blendenwalze müssen im Lichtmodul ortsfest gehalten werden. Die Halterung erfolgt zum Beispiel durch einen Halterahmen, in dem sich Aufnahmen für den Antrieb und das Gleitlager oder Kugellager befinden. Der Halterahmen ist zum Beispiel als Spritzgussteil aus Metall oder Kunststoff verwirklicht.

Aufgrund von Fluchtungsfehlern der Aufnahmen ergibt sich eine unerwünschte Verspannung der Blendenwalze in ihren Lagern. Unter einem Fluchtungsfehler wird dabei verstanden, dass die Aufnahmen seitlich versetzt zueinander sind und/oder dass sie zueinander schief ausgerichtet sind. Solche Fluchtungsfehler ergeben sich insbesondere bei Aufnahmen in Kunststoffspritzgussteilen durch Verzugserscheinungen beim Abkühlen nach dem Spritzgießvorgang und sind mit sinnvollem Aufwand kaum zu vermeiden.

Als Folge wird der Verschleiß erhöht, was zu einem erhöhten Spiel und damit zu einer Verschlechterung der optischen Eigenschaften, insbesondere einer Ungenauigkeit bei der Positionierung der Hell-Dunkel-Grenze führen kann. Darüber hinaus führt eine unvermeidliche Verringerung des Lagerspiels im Bereich tiefer Temperaturen ebenfalls zu einer den Verschleiß erhöhenden Reibung und den nachteiligen Folgen für die optischen Eigenschaften.

Aber auch bevor sich ein erhöhter Verschleiß bemerkbar macht, kann es durch die erhöhte Reibung bereits zu Ungenauigkeiten bei der Positionierung der Blendenwalze kommen, die ebenfalls bereits die optischen Eigenschaften beeinträchtigen. Unter einer erhöhten Reibung wird an dieser Stelle eine Reibung verstanden, die sich zum Beispiel in starren Gleitlagerbuchsen bei einem Fluchtungsfehler einstellt.

Vor diesem Hintergrund besteht die Aufgabe der Erfindung in der Angabe eines Projektionslichtmoduls der eingangs genannten Art, bei dem eine Verschlechterung der optischen Eigenschaften deutlich reduziert ist, unabhängig davon, ob die Verschlechterung nur durch erhöhte Reibung oder durch bereits erhöhten Verschleiß bedingt ist. Temperaturschwankungen, wie sie typischerweise bei einer bestimmungsgemäßen Verwendung des Scheinwerfers im Kraftfahrzeug auftreten, dürfen nicht zu einer Verschlechterung der optischen Eigenschaften führen.

Diese Aufgabe wird mit den Merkmalen des Anspruchs 1 gelöst. Die Erfindung unterscheidet sich vom Stand der Technik dadurch, dass wenigstens eines der beiden Lager der Blendenwalze ein elastisch verspanntes Gleitlager ist.

Die erfindungsgemäß elastisch verspannte Gleitlagerung lässt einerseits Achsfluchtungsfehler zu und gewährleistet gleichzeitig eine aus Gründen der Lagestabilität der Hell-Dunkel-Grenze erforderliche Spielfreiheit. Durch die elastische und damit nachgiebige Lagerung der Blendenwalze in ihrer Halterung kann die Lagerung absolut spielfrei und verschleißunempfindlich verwirklicht werden. Durch die elastische Nachgiebigkeit kann die Lagerung einen Fluchtungsfehler kompensieren, indem sie auf eine aus einem Fluchtungsfehler resultierende Auslenkung der Blendenwalze elastisch nachgiebig reagiert. Dadurch werden sonst auftretende überhöhte Lagerkräfte vermieden. Durch die Rückstellkräfte wird ferner die Spielfreiheit gewährleistet, die ein sonst mögliches, durch das Spiel bedingtes Zittern der Hell-Dunkel-Grenze verhindert.

Weitere Vorteile ergeben sich aus den Gegenständen von abhängigen Ansprüchen, der Beschreibung und den beigefügten Figuren.

Es versteht sich, dass die vorstehend genannten und in nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Fahrzeugscheinwerfer als technisches Umfeld der Erfindung;
- Fig. 2: einen Querschnitt durch ein Ausführungsbeispiel eines erfindungsgemäßen Projektions-Lichtmoduls;
- Fig. 3: eine perspektivische Darstellung einer Blendenwalze mit mehreren über ihre Mantelfläche verteilten Blendenkanten; und
- Fig. 4: eine perspektivische Ansicht der Blendenwalze aus der Fig. 3 zusammen mit einem Lagermodul, in dem ein Ende der Blendenwalze drehbar gelagert ist.

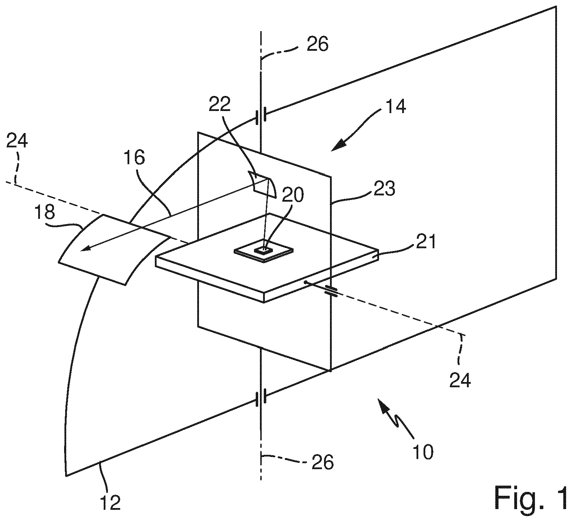

Im Folgenden wird zunächst das technische Umfeld der Erfindung erläutert. Im Einzelnen zeigt die Figur 1 einen Frontscheinwerfer 10 mit einem Scheinwerfergehäuse 12, einem in dem Scheinwerfergehäuse 12 angeordneten Lichtmodul 14 und einer für Licht 16 durchlässigen Abdeckscheibe 18. Das Licht 16 wird von einer Lichtquelle 20 erzeugt, die in der dargestellten Ausgestaltung eine Halbleiterlichtquelle, insbesondere eine Anordnung aus mehreren Leuchtdioden ist und auf einem als Kühlkörper dienenden Trägerelement 21 montiert ist. Die Erfindung ist aber nicht auf eine Verbindung mit Halbleiterlichtquellen beschränkt und kann auch mit anderen Lichtquellen, insbesondere Glühlampen oder Gasentladungslampen verwendet werden.

Durch ein optisches System 22 wird das von der Lichtquelle 20 erzeugte Licht 16 gebündelt und gegebenenfalls zusätzlich beeinflusst, um eine gewünschte Lichtverteilung vor dem Frontscheinwerfer 10 zu erzielen. In der dargestellten Ausgestaltung ist das optische System 22 ein Reflektor. Alternativ oder ergänzend können Blendenanordnungen und/oder Linsen als optische Elemente verwendet werden, um Reflexionssysteme oder Projektionssysteme zu realisieren und/oder um verschiedene Lichtverteilungen zu erzeugen. Die verschiedenen Lichtverteilungen unterscheiden sich zum Beispiel dadurch, ob sie eine definierte Hell-Dunkelgrenze aufweisen oder nicht und gegebenenfalls darin, wie eine solche Hell-Dunkelgrenze ausgestaltet ist. Unter dem optischen System 22 wird hier die Summe aller optischen Elemente verstanden, die die Intensität und/oder Richtung des von der Lichtquelle 20 emittierten Lichtes bis zu Austritt aus dem Projektions-Lichtmodul beeinflussen.

In der dargestellten Ausgestaltung ist das Lichtmodul 14 in einem Rahmen 23 im Gehäuse 12 aufgehängt. Zur Leuchtweitenregulierung oder auch zur Anhebung des Lichtbündels für eine Autobahnlicht-Lichtfunktion, bei der eine erhöhte Reichweite erwünscht ist, kann das Lichtmodul um die waagerechte Achse 24 geschwenkt werden. Eine Schwenkung um eine vertikale Achse 26 erfolgt zur Realisierung einer Kurvenlichtfunktion. Diese Lichtfunktionen und die zu ihrer Erzielung erforderlichen Ausgestaltungen optischer Elemente, Schwenkantriebe und Steuerelemente sind dem Fachmann vertraut und bedürfen daher an dieser Stelle keiner weiteren Erläuterung. Die Erfindung ist aber nicht auf solche schwenkbaren Kurvenlichtmodule beschränkt und kann auch bei Projektionslichtmodulen ohne Kurvenlichtfunktion verwendet werden.

Das Trägerelement 21 ist um die horizontale Achse schwenkbar in dem Rahmen 23 aufgehängt. Der Rahmen 23 ist um die vertikale Achse 26 schwenkbar in dem Gehäuse 12 oder einem Rahmen innerhalb des Gehäuses 12 aufgehängt. Mit dem Trägerelement verbunden sind dabei insbesondere die optischen Elemente 22, so dass diese jeweils mitgeschwenkt werden. Die Richtungsangaben horizontal und vertikal beziehen sich dabei auf eine Orientierung im Raum bei einer bestimmungsgemäßen Verwendung in einem Kraftfahrzeug, das auf einem ebenen Boden steht oder fährt. Bei einem auf ebenem Boden stehenden Fahrzeug ist die Vertikale parallel zu dessen Hochachse, und die Horizontale ist parallel zu dessen Querachse.

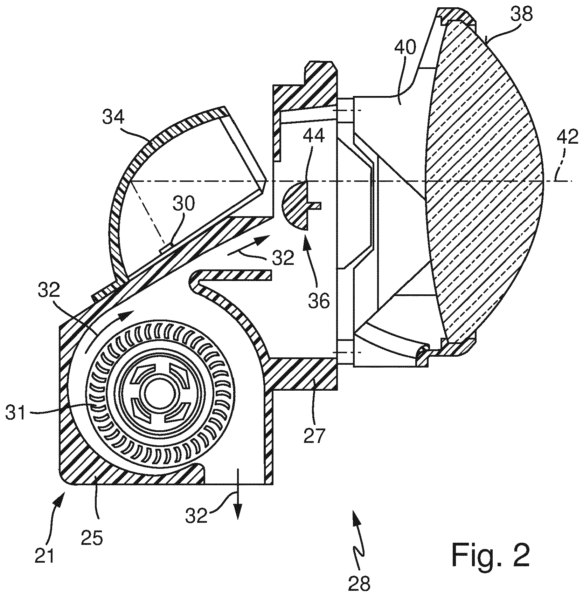

Die Fig. 2 zeigt ein Ausführungsbeispiel eines Projektionslichtmoduls, das eine Blendenwalze aufweist. Dabei zeigt die Figur 2 ein Lichtmodul 28, das beim Gegenstand der Figur 1 das Lichtmodul 14 ersetzt. In Verbindung mit den übrigen Merkmalen des Gegenstands der Figur 1 ergibt das Lichtmodul 28 ein Ausführungsbeispiel eines Frontscheinwerfers. Das Lichtmodul 28 ist in einem entlang seiner optischen Achse vollzogenen Längsschnitt dargestellt.

Im Einzelnen weist das Lichtmodul 28 eine Halbleiterlichtquelle 30 und ein Trägerelement 21 auf, das in der dargestellten Ausgestaltung thermisch mit der Halbleiterlichtquelle gekoppelt ist. Das Trägerelement 21 weist bevorzugt ein Gebläse 31 mit einem Gebläsegehäuse auf, das einen Wärme von der Halbleiterlichtquelle 30 abführenden Luftstrom 32 aktiv erzeugt. Dabei wird die Kühlluft von dem Gebläse 31 aus einer zur Zeichnungsebene senkrechten Richtung angesaugt. Die Halbleiterlichtquelle 30 ist also an der kompakten und stabilen Struktur des Trägerelements 21 befestigt. Die Erfindung ist aber auch ohne Gebläse verwendbar, also bei einer passiven Kühlung, bei der kein aktive Erzeugung eines Kühlluftstroms stattfindet.

Bei einer bevorzugten Ausgestaltung werden neben der Halbleiterlichtquelle 30 weitere Komponenten des Lichtmoduls 28 an der kompakten und stabilen Struktur des Trägerelements 21 befestigt. Beim Gegenstand der Fig. 2 sind dies optische Elemente in Form eines Reflektors 34, eine Blendenwalze 36 mit ihrem Antrieb und ihrer Lagerung, insbesondere einem Elektromotor, und eine Projektionslinse 38, die über einen Linsenträger 40 an dem Trägerelement 21 befestigt ist. Die Summe dieser Elemente stellt damit eine Ausgestaltung des optischen Systems 22 aus der Fig. 1 dar.

Die von der Halbleiterlichtquelle 30 erwärmte Luft 32 wird in der dargestellten Ausgestaltung in Richtung zur Projektionslinse 38 geblasen, wobei sie an der Blendenwalze 36 vorbeistreicht. Das Lichtmodul 28 ist also in dieser Ausgestaltung dazu eingerichtet, einen von einem Gebläse erzeugten Kühlluftstrom so zu führen, dass die Blende zumindest zu einem Teil in dem Kühlluftstrom liegt. Dies liefert den zusätzlichen Vorteil, dass die aufgeheizte Kühlluft Feuchtigkeit, die bei wechselnden Temperaturen und/oder Luftfeuchtigkeiten im Frontscheinwerfer kondensieren kann, aufnimmt und mit dem Luftstrom aus dem Frontscheinwerfer herausträgt.

Mit der zur Projektionslinse geblasenen Luft ist weiter der Vorteil verbunden, dass diese Luft an der Blendenwalze vorbeistreicht und damit Wärme von der Blendenwalze abführen kann, wenn sich diese aufgeheizt haben sollte.

Es ist daher bevorzugt, dass das Projektions-Lichtmodul ein Kühlgebläse aufweist und dass wenigstens ein Teil der vom Kühlluftgebläse geförderten Kühlluft so geführt wird, dass sie zumindest auch Wärme von der Blendenwalze abführen kann.

Darüber hinaus zeigt die Fig. 2 eine Aufteilung der Gebläseabluft auf mehrere Teilströme 32, wodurch zusätzlich zum Beispiel benachbarte Wärmequellen gekühlt werden können. Benachbarte Wärmequellen können zum Beispiel ein Lichtfunktionen steuerndes Steuergerät des Scheinwerfers und/oder um eine zugehörige Endstufenanordnung sein, wobei diese Aufzählung nicht abschließend sein soll.

Das Trägerelement 21 setzt sich in einer bevorzugten Ausgestaltung aus einem ersten Teil 25 und einem zweiten Teil 27 zusammen. Der erste Teil besteht bevorzugt aus einem gut wärmeleitfähigen Metall und dient als Kühlelement für die Halbleiterlichtquelle und, bevorzugt auch als Gebläsegehäuse. Bei diesem Teil kommt es insbesondere auf die thermischen Eigenschaften und die Festigkeit an. Das zweite Teil dient zur Befestigung und/oder Aufnahme und/oder Lagerung weiterer Teile des Projektions-Lichtmoduls. Bei diesem Teil ist es vorteilhaft, wenn sich komplexe Befestigungsstrukturen wie Formschlusselemente wie Rastnasen und dergleichen ohne großen Aufwand herstellen lassen. Diese Forderung wird insbesondere durch Spritzgussteile aus Kunststoff oder einem KunststoffVerbundmaterial erfüllt. Es ist daher bevorzugt, dass das der zweite Teil 27 des Trägerelements 21 aus einem solchen Material besteht. Die Befestigung des zweiten Teils 27 an dem ersten Teil 25 erfolgt zum Beispiel durch Schraubverbindungen. In einer besonders bevorzugten Ausgestaltung erfolgt die Befestigung dadurch, dass ein Abschnitt des ersten Teils 25 in eine Kunststoffspritzgussform des zweiten Teils 27 eingelegt und mit Kunststoffmaterial des zweiten Teils 27 umspritzt wird, so dass nach dem Erkalten und Aushärten eine nicht mehr zerstörungsfrei lösbare Verbindung zwischen dem ersten Teil 25 und dem zweiten Teil 27 besteht.

Bei der vorliegenden Erfindung geht es um die Lagerung der Blendenwalze 36. Die Blendenwalze ist allgemein ein Teil eines Projektionssystems und ist dort zwischen einer Primäroptik, hier dem Reflektor 34, und einer Sekundäroptik, hier der Projektionslinse 38 angeordnet.

Bei einem Projektionssystem bündelt die Primäroptik Licht einer Lichtquelle, hier der Halbleiterlichtquelle 30, in ein kleines Volumen innerhalb des Lichtmoduls 28, das sich auf der Höhe der optischen Achse 42 im Lichtweg zwischen der Primäroptik und der Sekundäroptik befindet. Mit anderen Worten: Die Primäroptik ist auf das kleine Volumen fokussiert. Dies leistet zum Beispiel ein Ellipsoidreflektor, in dessen einem Brennpunkt sich die Lichtquelle und in dessen anderen Brennpunkt, beziehungsweise Brennbereich sich das kleine Volumen befindet. Die Sekundäroptik ist ebenfalls auf das kleine Volumen fokussiert und projiziert die sich in dem kleinen Volumen einstellende Lichtverteilung in das Vorfeld des Lichtmoduls. Eine Blendenkante 44, die sich innerhalb des kleinen Volumens befindet, wird dann durch die Sekundäroptik als Hell-Dunkel-Grenze in der in das Vorfeld projizierten Lichtverteilung abgebildet.

In einer bevorzugten Ausgestaltung ist die Blendenwalze 36 um eine horizontale, senkrecht zur optischen Achse und bevorzugt parallel zu einer bei einer bestimmungsgemäßen Verwendung des Lichtmoduls horizontal verlaufenden Drehachse drehbar gelagert und weist auf ihrem Umfang verschiedene Konturen auf, die durch die Sekundäroptik auf die Straße projiziert werden und dabei verschiedene Hell-Dunkel-Grenzen darstellen.

Die Blendenwalze 36 besteht bevorzugt aus einem Verbundmaterial, das seinerseits bevorzugt aus Kunststoff mit in den Kunststoff eingebetteten Zusätzen besteht, wobei die Zusätze bevorzugt solche sind, die die Wärmeleitfähigkeit des Verbundmaterials gegenüber der Wärmeleitfähigkeit des reinen Kunststoffs erhöhen.

Als Zusätze werden bevorzugt Kohlefasern und/oder Metalloxide verwendet, letztere insbesondere in Pulverform.

Als Grundmaterial für den Verbundwerkstoff kommt ein Polyetherimid (PEI)- Kunststoff wie Ultem in Frage. Polyetherimid (PEI) im allgemeinen und so auch Ultem zeichnet sich durch eine ausreichende Temperaturfestigkeit und eine sehr geringe Ausgasung aus. Die geringe Ausgasung hat den Vorteil, dass sich auch über der jahrelangen Betriebszeit in Kraftfahrzeugen keine Verschlechterung der optischen Eigenschaften durch eine Kondensation von ausgegastem Material auf einer Reflexionsfläche oder einer Transmissionsfläche des Projektions-Lichtmoduls ergibt.

Polyetherimide wie Ultem werden in reiner Form und mit verschiedenen Zusätzen angeboten. Das Material ist sehr beständig gegenüber UV-Strahlen und lässt sich im Spritzgießverfahren verarbeiten. Die Verarbeitungstemperatur liegt je nach Typ zwischen 320 und 400 °C, bei einer Werkzeugtemperatur zwischen 120 und 180 °C.

Durch die als Folge der Zusätze erhöhte Wärmeleitfähigkeit des Verbundwerkstoffes kann sich die aufgenommene Wärme gleichmäßig über das ganze Volumen der Blendenwalze verteilen und über die an den beiden Enden der Blendenwalzen angeordneten Lager und/oder an die Umgebungsluft im Projektions-Lichtmodul, beziehungsweise an dem Gebläseabluftstrom 32, abgegeben werden.

Die Zusätze werden bevorzugt so klein gemahlen, dass sie zusammen mit dem Kunststoffmaterial in einem Spritzgussvorgang gemeinsam verarbeitet werden können.

Die Fig. 2 zeigt damit insbesondere ein Projektions-Lichtmodul 28, das eine Lichtquelle 30, eine Primäroptik, hier in Form eines Reflektors 34, eine Blendenwalze 36 und eine Sekundäroptik, hier in Form einer Linse 38, aufweist, wobei die Primäroptik dazu eingerichtet ist, Licht der Lichtquelle 30 in eine erste Lichtverteilung zu bündeln, die Blendenwalze 36 dazu eingerichtet ist, die erste Lichtverteilung mit einer quer zur Lichtausbreitung liegenden abschattend wirksamen Blendenkante 44 räumlich zu begrenzen, wobei die Blendenwalze 36 drehbar und so geformt ist, dass sich je nach Drehstellung der Blendenwalze 36 verschiedene Lagen der abschattend wirksamen Blendenkante 44 ergeben, und wobei die Sekundäroptik auf die erste Lichtverteilung fokussiert und dazu eingerichtet ist, die von der Blendenwalze 36 begrenzte erste Lichtverteilung als zweite Lichtverteilung in das Vorfeld des Projektions-Lichtmoduls und damit letztlich auf die Straße vor dem Kraftfahrzeug zu projizieren. Dabei besteht die Blendenwalze 36 aus einem Verbundmaterial aus Kunststoff mit in den Kunststoff eingebetteten Zusätzen, wobei die Zusätze die Wärmeleitfähigkeit des Verbundmaterials gegenüber dem reinen Kunststoff erhöhen.

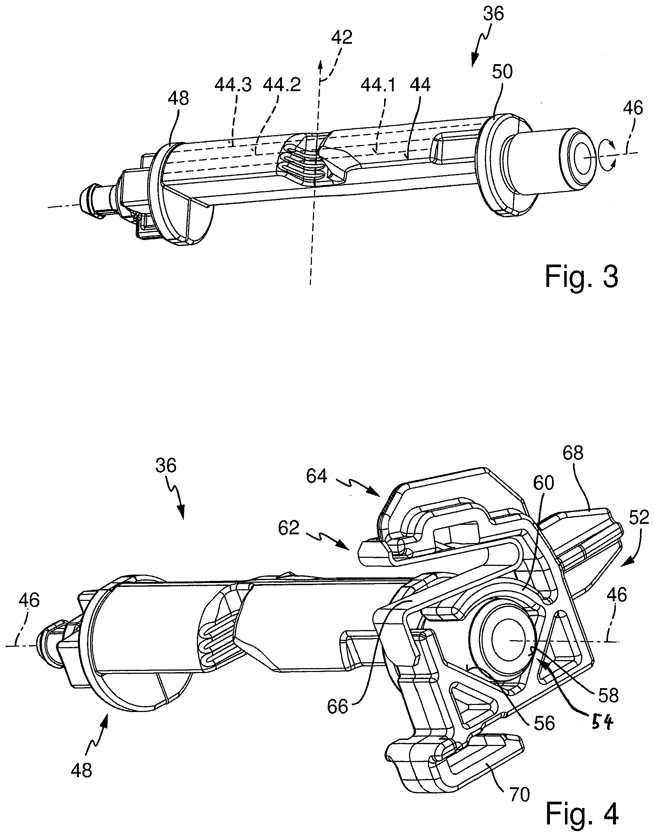

Figur 3 zeigt eine perspektivische Darstellung einer Blendenwalze 36 mit einer Drehachse 46, um die herum die Blendenwalze durch einen Antrieb in verschiedene Drehstellungen drehbar ist. Die Drehachse 46 liegt senkrecht zu der optischen Achse 42, die auch in etwa einer Hauptlichtabstrahlrichtung des Projektionslichtmoduls 28 entspricht. Bei einer bestimmungsgemäßen Verwendung des Projektions-Lichtmoduls 28 wird die Drehachse 46 bevorzugt parallel ausgerichtet sein. Dies ist aber nicht zwingend erforderlich sondern hängt vielmehr davon ab, wie die Hell-Dunkel-Grenze liegen und verstellt werden soll. Die Blendenwalze wird etwa auf ihrer ganzen, zwischen den Enden 48, 50 liegenden Länge durch die Primäroptik beleuchtet, wobei sich die Breite der Beleuchtung, also die Ausdehnung der Beleuchtung in Richtung eines Durchmessers der Blendenwalze bevorzugt auf den zwischen der Drehachse 46 und einer auf dem Mantel der Blendenwalze liegenden Blendenkante 44 beschränkt.

Der unterhalb der Blendenkante 44 liegende Bereich der Lichtverteilung oder Beleuchtung wird daher durch die Blendenwalze 36 abgeschattet und erscheint als dunkler Bereich in der auf die Straße projizierten Lichtverteilung. Durch eine von einer Zylindermantelfläche abweichende Strukturierung der Mantelfläche der Blendenwalze 36 ergeben sich verschiedene Blendenkanten 44, 44.1. 44.2, 44.3 die sich jeweils durch Hineindrehen in die Beleuchtung der Blendenwalze einstellen lassen. Die jeweilige Form der jeweils eingestellten Blendenkante bildet sich als Hell-Dunkel-Grenze in der auf die Straße projizierten Lichtverteilung ab. Die Lagen und Formen der Blendenkanten in der Fig. 3 sollen dabei lediglich zur Veranschaulichung ihrer unterschiedlichen Winkellage auf der Mantelfläche der Blendenwalze dienen. Die Lage und Form jeder Blendenkante hängt letztlich von der gewünschten Form der Lichtverteilung ab, also ob die Lichtverteilung überhaupt eine Hell-Dunkel-Grenze aufweisen soll und wie diese gegebenenfalls aussehen soll.

Die Blende liegt damit sowohl im Fokus der Primäroptik als auch im Fokus der Sekundäroptik. Das kleine Volumen, in das die Primäroptik das Licht fokussiert hat eine Fläche, die typischerweise kleiner bis gleich der oberen Hälfte der Querschnittsfläche der Blendenwalze bei einem längs ihrer Drehachse erfolgende Schnitt ist. Dies ist in einem Beispiel eine Fläche von etwa ca. 50 mm * 5 mm.

Das aus diesem kleinen Querschnitt austretende Licht wird durch die Sekundäroptik System in die breite Lichtverteilung auf der Fahrbahn gestreut.

Das bedeutet umgekehrt, dass von außen über die Sekundäroptik in das Projektionslichtmodul einfallende Strahlung, also nicht nur sichtbares Licht, sondern auch Infrarotstrahlung und Ultraviolettstrahlung, entsprechend stark fokussiert wird. Diese Fokussierung kann zu den weiter oben erwähnten thermischen Belastungen führen. Herkömmlicher Kunststoff hält diesen Belastungen unter ungünstigen Umständen, also bei hoher Strahlungsbelastung, nicht stand.

Um trotzdem die mit der Verwendung von Kunststoff einhergehenden Vorteile nutzen zu können, wird die Blendenwalze bevorzugt aus einem Verbundmaterial aus Kunststoff mit in den Kunststoff eingebetteten Zusätzen verwirklicht, wobei die Zusätze die Wärmeleitfähigkeit des Verbundmaterials gegenüber dem reinen Kunststoff erhöhen.

Die Figur 4 zeigt eine perspektivische Ansicht der Blendenwalze 36 aus der Fig. 3 zusammen mit einem Lagermodul 52, in dem ein Ende 50 der Blendenwalze 36 drehbar gelagert ist. Das Ende 50 ist als Lagerzapfen 54 ausgestaltet. Der Lagerzapfen besitzt in einer bevorzugten Ausgestaltung einen Durchmesser von 6 mm bis 8 mm.

Das andere Ende 48 der Blendenwalze 36 ist dazu eingerichtet, mit einem Blendenantrieb verbunden zu werden, der in der Fig. 4 nicht dargestellt ist. Die Verbindung erfolgt zum Beispiel durch Verrasten von Formschlusselementen des Endes 48 der Blendenwalze 36 mit einem Abtrieb des Antriebs.

Das Lagermodul 52 weist eine erste Lagerfläche 56 und eine zweite Lagerfläche 58 auf, die zusammen eine Aufnahme für den Lagerzapfen 54 bilden. Die beiden Lagerflächen 56 und 58 sind so angeordnet, dass sie einen Winkel einschließen. Sie sind Oberflächen von entsprechend angeordneten Teilvolumina des Lagermoduls 52, die mit anderen Teilvolumina des Lagermoduls 52 bevorzugt eine stoffschlüssige Einheit bilden. Die beiden Teilvolumina und ihre Lagerflächen 56, 58 bilden dadurch eine Aufnahme in der Form eines Prismas.

Die Größe des Winkels liegt bevorzugt zwischen 70° und 110°. In einer besonders bevorzugten Ausgestaltung ist der Winkel ein rechter Winkel. Dies ergibt eine stabile Lagerung bei kompakten Abmessungen. Die Lagerflächen besitzen in einer bevorzugten Ausgestaltung eine Breite von 4 bis 8 mm und eine Länge von 5 mm bis 10 mm. Dabei erstreckt sich die Breite in Richtung der Drehachse 46 der Blendenwalze 36, während sich die Länge jeweils in Richtung von Tangenten an den Lagerzapfen 54 erstreckt.

Im zusammengebauten Zustand liegt der Lagerzapfen 54 drehbar in der prismatischen Aufnahme. Um den Lagerzapfen 54 sicher in der Aufnahme zu halten, weist das Lagermodul 52 ferner ein erstes elastisches Element 60 auf. Das erste elastische Element 60 ist dazu eingerichtet, eine Kraft auf den in der Aufnahme liegenden Lagerzapfen 54 auszuüben, die diesen in die Richtung des Scheitels des von den beiden Lagerflächen 56, 58 eingeschlossenen Winkels hineindrückt.

Das erste elastische Element 60 ist bevorzugt ebenfalls ein stoffschlüssig mit der prismatischen Aufnahme, also mit den genannten, von den Lagerflächen 56, 58 begrenzten Teilvolumina und weiteren Teilvolumina des Lagermoduls 52 zusammenhängender Teil. Bevorzugt ist auch, dass das erste elastische Element 60 von einer der beiden Lagerflächen ausgehend zungenartig in den freien Raum zwischen den beiden Lagerflächen 56, 58 hineinragt. Dabei ist das erste elastische Element 60 in einem Abstand von dem Scheitel des von den beiden Lagerflächen 56, 58 eingeschlossenen Winkels angeordnet, in dem es bei einem Einsetzen des Lagerzapfens 54 in die Aufnahme von der Mantelfläche des Lagerzapfens 54 aus seiner Ruhelage ausgelenkt wird, so dass eine elastische Rückstellkraft generiert wird. Das Einsetzen des Lagerzapfens 54 erfolgt dabei bevorzugt in axialer Richtung etwa längs der Drehachse 46 der Blendenwalze 36.

Bevorzugt ist auch, dass das elastische Element 60 auf seiner dem Scheitel zugewandten Seite konkav gekrümmt ist. Durch die konkave Krümmung liegt der Kontakt zwischen dem elastischen Element 60 und dem in der prismatischen Aufnahme liegenden Lagerzapfen 54 weiter in der Mitte zwischen den beiden Lagerflächen als dies bei einem nicht gekrümmten elastischen Element der Fall wäre. Damit liegt auch die Richtung der Kraft, mit der das elastische Element 60 den Lagerzapfen 54 in die prismatische Aufnahme hineindrückt, näher an der Winkelhalbierenden der prismatischen Aufnahme als dies bei einem nicht gekrümmten elastischen Element der Fall wäre. Es ergibt sich auf jeden Fall eine gute Zentrierwirkung des ersten elastischen Elements 60 auf den in der Aufnahme liegenden Lagerzapfen 54. Außerdem trägt der gekrümmte Verlauf dazu bei, dass der Bauraumbedarf niedrig gehalten wird.

Im Ergebnis liegt damit eine Lagerung vor, mit der der Lagerzapfen 54 in radialer Richtung, aber nicht in axialer Richtung abgestützt wird. Es handelt sich daher um ein Loslager. Eine Abstützung in axialer Richtung erfolgt bei dieser Ausgestaltung bevorzugt an dem anderen Ende 48 der Blendenwalze 36, die dort mit einem Antrieb drehfest verbunden, insbesondere verrastet ist. Der Antrieb erfolgt bevorzugt durch einen Elektromotor mit Lagerückmeldung. Bei dieser Art der Lagerung der Blendenwalze 36 wird das Ende 48 der Blendenwalze 36 radial und axial abgestützt. Es handelt sich also um ein Festlager.

In einer bevorzugten Ausgestaltung, wie sie in der Fig. 4 dargestellt ist, weist das Lagermodul 52 zusätzlich zu dem stoffschlüssig mit der Aufnahme verbundenen ersten elastischen Element 60 noch ein zweites elastisches Element 62 auf, das dazu eingerichtet und angeordnet ist, die Andruckkraft des konkav gekrümmten ersten elastischen Elements 60 zu verstärken.

Dazu stützt sich das zweite elastische Element 62 in der dargestellten Ausgestaltung an dem ersten elastischen Element 60 ab. Das zweite elastische Element 62 stützt sich dabei bevorzugt und wie in Fig. 4 dargestellt ist, an der Seite des ersten elastischen Elements 60 ab, die derjenigen Seite des ersten elastischen Elements 60 gegenüberliegt, mit der das erste elastische Element 60 seine Andruckkraft auf den Lagerzapfen 54 ausübt.

Ferner stützt sich das zweite elastische Element 62 in der dargestellten Ausgestaltung andererseits an einem Widerlagerarm 64 ab, der ebenfalls ein mit den genannten Teilvolumina der Aufnahme stoffschlüssig verbundenes Teilvolumen des der Aufnahme bildet. Durch seine Materialstärke und seine geometrische Ausgestaltung weist der Widerlagerarm 64 jedoch eine größere Steifigkeit auf als das erste elastische Element 60.

In der Ausgestaltung, die in der Figur 4 dargestellt ist, weist der Widerlagerarm 64 ein T-Profil auf. Der Widerlagerarm 64 und das erste elastische Element 60 sind bevorzugt so angeordnet, dass sie auf der gleichen Seite aus dem übrigen Material des Teils des Lagermoduls 52 herausragen, das die Aufnahme für den Lagerzapfen 54 bildet und etwa in die gleiche Richtung weisen. Dabei können sie parallel zueinander ausgerichtet oder einen Winkel einschließen, der verhältnismäßig spitz ist. Der Winkel ist insbesondere kleiner als 20°. Bei größeren Winkeln würden elastische Kraftkomponenten des in der Fig. 4 dargestellten zweiten elastischen Elements 62, die in unerwünschte, nicht zentrierend wirkende Richtungen weisen, in einer unerwünschten Größe auftreten. Dass überhaupt ein Winkel vorgesehen ist liegt an der aus dem Winkel resultierenden Erleichterung der Montage.

Das zweite elastische Element 64 ist bevorzugt als metallisches Federblechteil 66 oder metallisches Federdrahtteil verwirklicht, das eine u- oder v-förmige Gestalt besitzt und mit seiner geschlossenen Seite, also dem Boden des u oder der Seite des v, in die von dem ersten elastischen Element 60 und dem Widerlagerarm 64 gebildete Lücke unter Vorspannung hineinpasst. Bevorzugt ist auch, dass das zweite elastische Element 62 und der Widerlagerarm 64 und/oder das erste elastische Element 60 zueinander komplementäre Rastelemente aufweisen, mit denen das zweite elastische Element 62 mit dem Widerlagerarm 64 und/oder dem ersten elastischen Element 60 verrastet und damit gegen ein unbeabsichtigtes Herausfallen gesichert wird.

Im Ergebnis wird damit ein durch die elastischen Elemente spielfrei verspanntes Gleitlager für die Blendenwalze 36 bereitgestellt. Das verspannte Gleitlager ist dabei in der dargestellten Ausgestaltung ein federbelastetes Prismenlager.

In der dargestellten Ausgestaltung ist das Lagermodul 52 ein von dem zweiten Teil 27 des Trägerelements 21 separates Teil, das jedoch mit dem zweiten Teil 27 des Trägerelements fest verbunden wird. Der zweite Teil 27 dient, wie weiter oben ausgeführt wurde, auch zur Aufnahme und Lagerung der Blendenwalze. In einer bevorzugten Ausgestaltung erfolgt die Verbindung des zweiten Lagermoduls 52 mit dem zweiten Teil 27 des Trägerelements 21 durch eine Rastverbindung. Zu diesem Zweck weist das Lagermodul 52 in der Ausgestaltung, die in der Fig. 4 dargestellt ist, Rastelemente 68 und 70 auf, die mit entsprechend komplementär ausgestalteten Rastelementen des zweiten Teils 27 des Trägerelements 21 verrasten.

Das Lagermodul 52 kann aber auch ein einstückiger Bestandteil Teil des zweiten Teils 27 des Trägerelements 21, beziehungsweise des Trägerelements 21 sein. In diesem Fall ist bevorzugt, dass das Lagermodul dadurch erzeugt wird, dass ein Abschnitt des Trägerelements 21 oder des zweiten Teils 27 des Trägerelements 21 in eine Spritzgussform des Lagermoduls eingelegt und mit Material des Lagermoduls umspritzt wird, wobei das Lagermodul 52 bevorzugt aus einem gut als Gleitlager geeigneten Kunststoffmaterial besteht.

Um eine möglichst große Wärmeübergangsfläche zu der Luft bereitzustellen, ist es bevorzugt, den zweiten Teil 27 des Trägerelements 21 aus einem gut wärmeleitfähigen Kunststoff oder einem Kunststoffverbundmaterial herzustellen. Der zweite Teil 27 kann dann Wärme sowohl von der Blendenwalze 36 als auch von dem ersten Teil 25 aufnehmen und weiterleiten und so insbesondere Kühlkörperfunktionen übernehmen.

Durch die Verwirklichung des Lagermoduls 52 und des zweiten Teils 27 des Trägerelements 21 als separate Bauteile oder als aus zwei oder mehr Materialien bestehendes Mehrkomponenten-Spritzgussteil kann jedes dieser Bauteile aus einem für seine jeweilige Verwendung optimalen Material hergestellt werden. Der zweite Teil wird in einer Ausgestaltung aus einem gut wärmleitenden Kunststoffmaterial wie es weiter oben bereits beschrieben wurde, hergestellt. Bei dem Material handelt es sich bevorzugt um das gleiche Material, aus dem auch die Blendenwalze 36 hergestellt wird. Ein solches Verbundmaterial hat jedoch unter Umständen abrasive Eigenschaften. Es wäre daher verschleißintensiv, wenn die Blendenwalze direkt in dem Material des zweiten Teils 27 des Trägerelements gelagert werden würde.

Das Lagermodul 52 besteht bevorzugt aus einem gut als Gleitlager geeigneten Kunststoffmaterial, so dass die abrasiven Materialen der Blendenwalze und des Trägerelements 21 keinen Reibungskontakt miteinander haben. Dieses Kunststoffmaterial ist bevorzugt ein Material, das verschleißarm und temperaturbeständig ist.

Das Lagermodul wird also bevorzugt mit dem ersten Trägerelement 21 verrastet. Die resultierende verspannte Gleitlagerung lässt Achsfluchtungsfehler, wie sie insbesondere beim Kunststoffspritzguss auftreten können, zu, ohne dass dafür ein erhöhtes Spiel in Kauf genommen werden muss. Im Gegenteil, durch die elastisch verspannte Lagerung wird sogar eine Spielfreiheit erreicht.

Dadurch werden auch Auswirkungen von Temperaturschwankungen auf das Lagerspiel ausgeglichen, wie sie typischerweise im Scheinwerfer auftreten können. Die unterstützende Wirkung des zweiten elastischen Elements kompensiert ein gegebenenfalls auftretendes Ermüden des Kunststoffes des ersten elastischen Elements unter dem Einfluss von hoher Temperatur.

## Patentansprüche

1. Projektions-Lichtmodul (14; 28) für einen Kraftfahrzeugscheinwerfer (10), das eine Lichtquelle, eine Primäroptik, eine Blendenwalze (36) und eine Sekundäroptik aufweist, wobei die Primäroptik dazu eingerichtet ist, Licht der Lichtquelle in eine erste Lichtverteilung zu bündeln, die Blendenwalze (36) dazu eingerichtet ist, die erste Lichtverteilung mit einer quer zur Lichtausbreitung liegenden abschattend wirksamen Blendenkante (44) räumlich zu begrenzen, wobei die Blendenwalze drehbar gelagert und so geformt ist, dass sich je nach Drehstellung der Blendenwalze (36) verschiedene Lagen der abschattend wirksamen Blendenkante (44) ergeben, wobei das eine Lager an einem Ende (50) der Blendenwalze angeordnet ist und das andere Lager an einem anderen Ende (48) der Blendenwalze (36) angeordnet ist, und wobei die Sekundäroptik auf die erste Lichtverteilung fokussiert und dazu eingerichtet ist, die von der Blendenwalze (36) begrenzte erste Lichtverteilung als zweite Lichtverteilung in das Vorfeld des Scheinwerfers zu projizieren, **dadurch gekennzeichnet, dass** wenigstens eines der beiden Lager ein elastisch verspanntes Gleitlager ist, das ein Lagermodul (52) mit einer ersten Lagerfläche (56) und einer zweiten Lagerfläche (58) aufweist, die zusammen eine Aufnahme für einen Lagerzapfen (54) der Blendenwalze (36) bilden, wobei die Lagerflächen (56, 58) Oberflächen von entsprechend angeordneten Teilvolumina des Lagermoduls (52) sind, die mit anderen Teilvolumina des Lagermoduls (52) eine stoffschlüssige Einheit bilden, die beiden Teilvolumina und ihre Lagerflächen (56, 58) eine Aufnahme in der Form eines Prismas bilden, die beiden Lagerflächen (56) und (58) so angeordnet sind, dass sie einen Winkel einschließen, wobei die Größe des Winkels zwischen 70° und 110° liegt, und der insbesondere ein rechter Winkel ist, das Lagermodul (52) ein erstes elastisches Element (60) aufweist, das dazu eingerichtet ist, eine Kraft auf den in der Aufnahme liegenden Lagerzapfen (54) auszuüben, die diesen in die Richtung des Scheitels des von den beiden Lagerflächen (56, 58) eingeschlossenen Winkels hineindrückt, das erste elastische Element (60) ein stoffschlüssig mit der prismatischen Aufnahme, also mit den genannten, von den Lagerflächen (56, 58) begrenzten Teilvolumina und weiteren Teilvolumina des Lagermoduls (52) zusammenhängender Teil ist, und wobei das erste elastische Element (60) von einer der beiden Lagerflächen ausgehend zungenartig in den freien Raum zwischen den beiden Lagerflächen (56, 58) hineinragt.

2. Lichtmodul (28) nach Anspruch 1, **dadurch gekennzeichnet, dass** das elastische Element (60) auf seiner dem Scheitel zugewandten Seite konkav gekrümmt ist.

3. Lichtmodul (28) nach einem der Ansprüche 1 bis 2, **dadurch gekennzeichnet, dass** das Lagermodul (52) zusätzlich zu dem stoffschlüssig mit der Aufnahme verbundenen ersten elastischen Element (60) noch ein zweites elastisches Element (62) aufweist, das dazu eingerichtet und angeordnet ist, die Andruckkraft des konkav gekrümmten ersten elastischen Elements (60) zu verstärken.

4. Lichtmodul (28) nach Anspruch 3, **dadurch gekennzeichnet, dass** das zweite elastische Element (64) als metallisches Federblechteil (66) oder metallisches Federdrahtteil verwirklicht ist, das eine u- oder v-förmige Gestalt besitzt.

5. Lichtmodul (28) nach einem der Ansprüche 1 bis 4, **dadurch gekennzeichnet, dass** das Lichtmodul ein Trägerelement aufweist, an dem neben der Halbleiterlichtquelle (30) weitere Komponenten des Lichtmoduls (28) befestigt sind und das sich aus einem ersten Teil (25) und einem zweiten Teil (27) zusammensetzt, wobei der erste Teil aus einem gut wärmeleitfähigen Metall besteht und als Kühlelement für die Halbleiterlichtquelle dient und wobei das zweite Teil zur Befestigung und/oder Aufnahme und/oder Lagerung weiterer Teile des Projektions-Lichtmoduls dient, und dass das Lagermodul (52) ein von dem zweiten Teil (27) des Trägerelements (21) separates Teil ist, das jedoch mit dem zweiten Teil (27) des Trägerelements fest verbindbar ist.

6. Lichtmodul (28) nach einem der Ansprüche 1 bis 5, **dadurch gekennzeichnet, dass** das Lagermodul (52) aus einem als Gleitlager geeigneten Kunststoffmaterial besteht, so dass die Materialen der Blendenwalze und des Trägerelements (21) keinen Reibungskontakt miteinander haben.

## Claims

1. Projection light module (14; 28) for a motor vehicle headlamp (10), which comprises a light source, a primary lens, an aperture roll (36) and a secondary lens, the primary lens being designed to focus light from the light source into a first light distribution, the aperture roll (36) being designed to spatially limit the first light distribution by means of an aperture edge (44) that has the effect of shading and is transverse to the light propagation, the aperture roll being rotatably mounted and formed such that various positions of the aperture edge (44) having the effect of shading arise depending on the rotational position of the aperture roll (36), one bearing being arranged at one end (50) of the aperture roll, and the other bearing being arranged at another end (48) of the aperture roll (36), and the secondary lens being focussed on the first light distribution and being designed to project the first light distribution limited by the aperture roll (36) into the space in front of the headlamp as a second light distribution, **characterised in that** at least one of the two bearings is an elastically strained slide bearing that comprises a bearing module (52) having a first bearing surface (56) and a second bearing surface (58), which together form a holder for a journal (54) of the aperture roll (36), the bearing surfaces (56, 58) being surfaces of correspondingly arranged partial volumes of the bearing module (52), which volumes form an integral unit together with other partial volumes of the bearing module (52), the two partial volumes and the bearing surfaces (56, 58) thereof forming a holder in the shape of a prism, the two bearing surfaces (56) and (58) being arranged such that they enclose an angle, the size of the angle being between 70° and 110°, and which angle is in particular a right angle, the bearing module (52) comprising a first elastic element (60) that is designed to exert, on the journal (54) in the holder, a force that pushes said journal towards the vertex of the angle enclosed by the two bearing surfaces (56, 58), the first elastic element (60) being a continuous part that is integral with the prismatic holder, i.e. with said partial volumes defined by the bearing surfaces (56, 58) and further partial volumes of the bearing module (52), and the first elastic element (60) protruding from one of the two bearing surfaces into the free space between the two bearing surfaces (56, 58) in the manner of a tongue.

2. Light module (28) according to claim 1, **characterised in that** the elastic element (60) is concave on the side thereof facing the vertex.

3. Light module (28) according to any of claims 1 to 2, **characterised in that**, in addition to the first elastic element (60) integrally connected to the holder, the bearing module (52) also comprises a second elastic element (62) that is designed and arranged to increase the pressing force of the concave first elastic element (60).

4. Light module (28) according to claim 3, **characterised in that** the second elastic element (64) is implemented as a metal spring sheet part (66) or metal spring wire part that is U-shaped or V-shaped.

5. Light module (28) according to any of claims 1 to 4, **characterised in that** the light module comprises a carrier element to which, in addition to the semiconductor light source (30), further components of the light module (28) are fastened and which is composed of a first part (25) and a second part (27), the first part being made of a metal having high thermal conductivity and being used as a cooling element for the semiconductor light source, and the second part being used to fasten and/or hold and/or mount further parts of the projection light module, and **in that** the bearing module (52) is a part that is separate from the second part (27) of the carrier element (21) but can be rigidly connected to the second part (27) of the carrier element.

6. Light module (28) according to any of claims 1 to 5, **characterised in that** the bearing module (52) is made of a plastics material suitable as a slide bearing such that the materials of the aperture roll and the carrier element (21) are not in frictional contact with one another.

## Revendications

1. Module lumineux de projection (14 ; 28) pour un phare de véhicule automobile (10) qui comprend une source lumineuse, une optique primaire, un diaphragme (36) ayant le forme d'un rouleau et une optique secondaire, l'optique primaire étant agencée pour focaliser de la lumière de la source lumineuse en une première répartition de lumière, le diaphragme (36) ayant la forme d'un rouleau étant agencé pour délimiter dans l'espace la première répartition de lumière à l'aide d'un bord de diaphragme (44) disposé transversalement à la propagation de la lumière et produisant un effet d'ombragement, le diaphragme ayant la forme d'un rouleau étant monté à rotation et étant configuré de façon telle que différentes positions du bord de diaphragme (44) produisant un effet d'ombragement en résultent en fonction de la position de rotation du diaphragme (36) ayant la forme d'un rouleau, un palier étant disposé à une extrémité (50) du diaphragme ayant la forme d'un rouleau et l'autre palier étant disposé à une autre extrémité (48) du diaphragme (36) ayant la forme d'un rouleau, et l'optique secondaire étant focalisée sur la première répartition de lumière et étant agencée de façon à projeter la première répartition de lumière délimitée par le diaphragme (36) ayant la forme d'un rouleau, comme deuxième répartition de lumière sur l'avant proche du phare, **caractérisé en ce qu'**au moins un des deux paliers est un palier coulissant élastiquement précontraint qui comprend un module de palier (52) avec une première surface de palier (56) et une deuxième surface de palier (58) qui forment ensemble un logement pour un axe de pivot (54) du diaphragme (36) ayant la forme d'un rouleau, les surfaces de palier (56, 58) étant des surfaces de volumes partiels du module de palier (52) disposés de manière appropriée qui forment, ensemble avec d'autres volumes partiels du module de palier (52), une unité en complémentarité de matière, les deux volumes partiels et leurs surfaces de palier (56, 58) formant un logement ayant la forme d'un prisme, les deux surfaces de palier (56) et (58) étant disposées de façon telle qu'elles enferment un angle, la dimension de l'angle étant entre 40 ° et 110 °, et qui est notamment un angle droit, le module de palier (52) comprenant un premier élément élastique (60) qui est agencé pour appliquer un effort sur l'axe de pivot (54) disposé dans le logement, qui force celui-ci dans la direction du sommet de l'angle enfermé par les deux surfaces de palier (56, 58), le premier élément élastique (60) étant une partie associée en complémentarité de matière au logement prismatique, à savoir auxdits volumes partiels délimités par les surfaces de palier (56, 58) et à d'autres volumes partiels du module de palier (52), et le premier élément élastique (60) s'étendant à partir de l'une des deux surfaces de palier, à la façon d'une languette, dans l'espace libre entre les deux surfaces de palier (56, 58).

2. Module lumineux (28) selon la revendication 1, **caractérisé en ce que** l'élément élastique (60) est courbé concave sur son côté orienté vers le sommet.

3. Module lumineux (28) selon l'une des revendications 1 à 2, **caractérisé en ce que** le module de palier (52) comprend en plus du premier élément élastique (60) associé en complémentarité de matière au logement, encore un deuxième élément élastique (62) qui est agencé et disposé de façon à amplifier la force d'appui du premier élément élastique (60) courbé concave.

4. Module lumineux (28) selon la revendication 3, **caractérisé en ce que** le deuxième élément élastique (64) est réalisé comme pièce résiliente en tôle métallique (66) ou comme pièce résiliente en fil métallique, qui présente une forme en U ou en V.

5. Module lumineux (28) selon l'une des revendications 1 à 4, **caractérisé en ce que** le module lumineux comprend un élément de support sur lequel sont fixés, outre la source lumineuse semi-conductrice (30), d'autres composantes du module lumineux (28), et qui se compose d'une première partie (25) et d'une deuxième partie (27), la première partie étant réalisée en un métal thermiquement bien conducteur et servant comme élément réfrigérant pour la source lumineuse semi-conductrice, et la deuxième partie servant pour la fixation et/ou la réception et/ou le logement d'autres parties du module lumineux de projection, et **en ce que** le module de palier (52) est une partie séparée de la deuxième partie (27) de l'élément de support (21) qui est, cependant, adaptée à être attachée de manière fixe à la deuxième partie (27) de l'élément de support.

6. Module lumineux (28) selon l'une des revendications 1 à 5, **caractérisé en ce que** le module de palier (52) est réalisé en une matière synthétique apte à être un palier coulissant, si bien que les matières du diaphragme ayant la forme d'un rouleau et de l'élément de support (21) ne soient pas en contact de friction l'un avec l'autre.
